# FASCICULE DE BREVET EUROPEEN

(11) **EP 4 346 528 B1**
(45) Date de publication et mention de la délivrance du brevet: **07.05.2025**
(21) Numéro de dépôt: 22730261.9
(22) Date de dépôt: 24.05.2022
(51) Int. Cl.: A47J 43/06, A47J 43/08, A47J 44/02

(54) **APPAREIL ÉLECTROMÉNAGER DE PRÉPARATION CULINAIRE**
ELEKTRISCHES HAUSHALTSGERÄT ZUR ZUBEREITUNG VON LEBENSMITTELN
ELECTRIC HOUSEHOLD APPLIANCE FOR PREPARING FOOD

(30) Priorité: 25.05.2021 FR 2105439
(43) Date de publication de la demande: 10.04.2024
(73) Titulaire: SEB S.A., 69130 Ecully (FR)
(72) Inventeur: FERRON, Jean-Baptiste, 69134 Ecully Cedex (FR); LEMERCIER, Michel, 69134 Ecully Cedex (FR); FOULONNEAU, Stéphane, 69134 Ecully Cedex (FR)
(74) Mandataire: Regimbeau
(86) Numéro de dépôt international: PCT/EP2022/064056
(87) Numéro de publication internationale: WO 2022/248473

(56) Documents cités:
- WO-A1-2006/120341
- WO-A1-2006/120341
- WO-A1-2012/080679
- WO-A1-2012/080679
- DE-A1- 102005 040 509
- DE-A1- 102005 040 509
- GB-A- 2 453 546
- GB-A- 2 453 546

## Description

### DOMAINE DE L'INVENTION

La présente invention concerne un appareil électroménager de préparation culinaire.

### ETAT DE LA TECHNIQUE

On connait des appareils électroménagers de préparation culinaire comprenant :
- une sortie principale, qui comprend un arbre de sortie principal agencé pour être entrainé en rotation par un moteur
- une sortie secondaire, qui comprend un arbre de sortie secondaire agencé pour être entrainé en rotation par un moteur.

La demande internationale WO 2006/120341 donne un exemple d'un tel appareil électroménager de préparation culinaire.

Chaque sortie peut recevoir un accessoire de travail et généralement l'accessoire de travail placé sur l'une des sorties est différent de celui placé sur l'autre sortie. En d'autres termes, chaque accessoire de travail est associé à une sortie donnée, mais plusieurs accessoires de travail peuvent être associés à une même sortie.

La vitesse de rotation du moteur est variable et paramétrée par un dispositif de sélection comprenant une pluralité de positions de vitesse.

Pour une position de vitesse donnée, les appareils électroménagers de préparation culinaire connus utilisent une seule vitesse de rotation du moteur, quel que soit l'accessoire de travail utilisé, ce qui n'est pas optimal en termes d'utilisation de l'appareil électroménager.

Il y a donc un besoin pour un nouveau type d'appareil électroménager de préparation culinaire dont le fonctionnement est amélioré, notamment pour l'utilisation d'accessoires de travail différents.

### EXPOSE DE L'INVENTION

Ainsi, il est proposé selon l'invention un appareil électroménager de préparation culinaire comprenant un moteur, une sortie principale comprenant un arbre de sortie principal agencé pour être entrainé en rotation par le moteur, une trappe mobile ou amovible pouvant occuper une position d'obturation dans laquelle la trappe empêche l'accès à la sortie principale, un dispositif de détection de la position de la trappe, un dispositif de sélection de vitesse comprenant une pluralité de positions de vitesse, et une unité de commande configurée pour commander une vitesse de rotation du moteur en fonction de la position de vitesse du dispositif de sélection de vitesse. L'unité de commande est en outre configurée, pour au moins une des positions de vitesse, pour commander une première vitesse de rotation du moteur lorsque la trappe occupe la position d'obturation et une deuxième vitesse de rotation du moteur lorsque la trappe n'occupe pas la position d'obturation. La première vitesse de rotation du moteur est différente de la deuxième vitesse de rotation du moteur, la première vitesse de rotation du moteur et la deuxième vitesse de rotation du moteur étant non nulles.

Cet appareil électroménager de préparation culinaire permet d'adapter la vitesse du moteur, pour ladite au moins une des positions de vitesse, en fonction de la présence ou de l'absence de la trappe et ainsi d'adapter cette vitesse à l'accessoire de travail utilisé.

Le fait de pouvoir adapter la vitesse de rotation du moteur en fonction de l'accessoire de travail utilisé permet d'obtenir un meilleur rapport performance/bruit. En effet, lorsque l'appareil électroménager de préparation culinaire utilise une même gamme de vitesses de rotation du moteur, quel que soit l'accessoire de travail utilisé, cette gamme de vitesses unique peut empêcher par exemple d'avoir des performances optimales pour un accessoire de travail si cette gamme de vitesses ne permet pas d'atteindre une vitesse suffisante pour ledit accessoire de travail, ou au contraire peut entrainer un bruit significatif si la vitesse utilisée est élevée.

Des aspects préférés mais non limitatifs de cet appareil électroménager de préparation culinaire, pris seuls ou en combinaison, sont les suivants :
- l'appareil électroménager de préparation culinaire comprend en outre une sortie secondaire comprenant un arbre de sortie secondaire agencé pour être entrainé en rotation par le moteur.
- la au moins une des positions de vitesse correspond à la position de vitesse de rotation maximale du moteur.
- la première vitesse de rotation du moteur est inférieure à la deuxième vitesse de rotation du moteur.
- un écart entre la première vitesse de rotation du moteur et la deuxième vitesse de rotation du moteur est maximal lorsque la position de vitesse est la plus élevée.
- un écart entre la première vitesse de rotation du moteur et la deuxième vitesse de rotation du moteur est compris entre 300 tours/minute et 3000 tours/minute, de préférence compris entre 1000 tours/minute et 2000 tours/minute.
- l'unité de commande est configurée pour que, pour plusieurs positions de vitesse de la pluralité de positions de vitesse, la première vitesse de rotation du moteur et la deuxième vitesse de rotation du moteur soient différentes et pour que, pour les autres positions de vitesse de la pluralité de positions de vitesse, la première vitesse de rotation du moteur et la deuxième vitesse de rotation du moteur soient identiques.
- l'unité de commande est configurée pour que la première vitesse de rotation du moteur et la deuxième vitesse de rotation du moteur soient identiques, lorsque la vitesse de rotation du moteur est inférieure à 5000 tours/minute.
- l'unité de commande est configurée pour commander la vitesse de rotation du moteur entre 1700 tours/min et 15000 tours/min.
- l'appareil électroménager de préparation culinaire comprend en outre un socle présentant une embase ayant une zone d'accueil configurée pour recevoir un récipient de travail, et une tête liée au socle et comprenant la sortie principale, un coupleur principal configuré pour permettre un accouplement et un désaccouplement d'un premier accessoire de travail sur la sortie principale et pour assurer l'entraînement en rotation du premier accessoire de travail via l'arbre de sortie principal, la sortie secondaire, et un coupleur secondaire configuré pour permettre un accouplement et un désaccouplement d'un deuxième accessoire de travail sur la sortie secondaire et pour assurer l'entraînement en rotation du deuxième accessoire de travail via l'arbre de sortie secondaire.
- la sortie secondaire est une première sortie secondaire, l'arbre de sortie secondaire est un premier arbre de sortie secondaire, le coupleur secondaire est un premier coupleur secondaire, la tête comprenant en outre une deuxième sortie secondaire comprenant un deuxième arbre de sortie secondaire agencé pour être entrainé en rotation par le moteur, la tête comprenant en outre un deuxième coupleur secondaire configuré pour permettre un accouplement et un désaccouplement du deuxième accessoire de travail sur la deuxième sortie secondaire et pour assurer l'entraînement en rotation du deuxième accessoire de travail via le deuxième arbre de sortie secondaire, la deuxième sortie secondaire étant agencée sous la tête ou à une extrémité frontale de la tête.
- le premier arbre de sortie secondaire est agencé pour être entrainé en rotation par le moteur via un réducteur, de sorte que le premier arbre de sortie secondaire tourne moins vite que l'arbre de sortie principal et/ou le deuxième arbre de sortie secondaire est agencé pour être entrainé en rotation par le moteur via un réducteur, de sorte que le deuxième arbre de sortie secondaire tourne moins vite que l'arbre de sortie principal.
- le dispositif de détection comprend un capteur à effet Hall et un aimant, l'aimant étant positionné sur la trappe, le capteur à effet Hall étant positionné dans la tête.
- le dispositif de détection comprend un interrupteur positionné dans la tête, l'interrupteur étant actionné par la trappe lorsque la trappe occupe la position d'obturation.

### DESCRIPTION DES FIGURES

D'autres caractéristiques et avantages de l'invention ressortiront encore de la description qui suit, laquelle est purement illustrative et non limitative, et doit être lue en regard des figures annexées sur lesquelles :
La figure 1 représente un exemple de réalisation d'un appareil électroménager de préparation culinaire de l'invention selon une première configuration.
La figure 2 représente une deuxième configuration de l'exemple de réalisation de l'appareil électroménager de préparation culinaire de l'invention illustré sur la figure 1.
Les figures 3a et 3b représentent le dispositif d'entrainement selon un aspect de l'invention.
La figure 4 représente le dispositif de détection selon un aspect de l'invention.
La figure 5a représente un bol blender utilisable avec l'appareil électroménager de préparation culinaire de l'invention.
La figure 5b représente un porte-outil amovible du bol blender représenté sur la figure 5a.
La figure 5c représente un réceptacle de bol blender utilisé avec le porte-outil amovible représenté sur la figure 5b pour obtenir le bol blender représenté sur la figure 5a.
La figure 6 représente le bol blender représenté sur la figure 5a couplé avec la sortie principale de l'appareil électroménager de préparation culinaire de l'invention.
La figure 7 représente un bol mini-hachoir utilisable avec l'appareil électroménager de préparation culinaire de l'invention.
La figure 8 représente le bol mini-hachoir représenté sur la figure 7 couplé avec la sortie principale de l'appareil électroménager de préparation culinaire de l'invention.
La figure 9 représente le crochet pour pâte à pain couplé avec une sortie secondaire de l'appareil électroménager de préparation culinaire de l'invention.

### DESCRIPTION DETAILLEE DE L'INVENTION

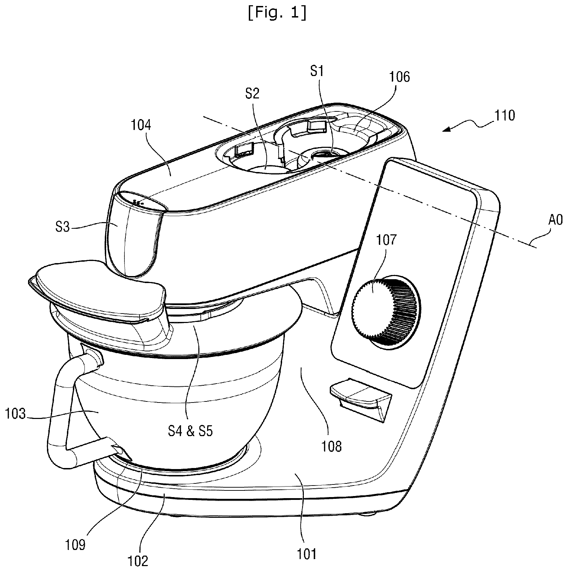

La figure 1 représente un exemple d'appareil électroménager de préparation culinaire 110. L'appareil électroménager de préparation culinaire 110 comprend un socle 101, ici en forme de pied, comportant une embase 102 sensiblement horizontale et un jambage 108 qui s'étend verticalement vers le haut depuis le socle 101. Le socle 101 est destiné à reposer sur un plan de travail horizontal. L'embase 102 comporte une zone d'accueil 109 configurée pour recevoir un récipient de travail 103, ici sous la forme d'une cuve, généralement amovible.

Le récipient de travail 103 est par exemple monté de manière amovible sur la zone d'accueil 109 de l'embase 102 par une liaison à baïonnette.

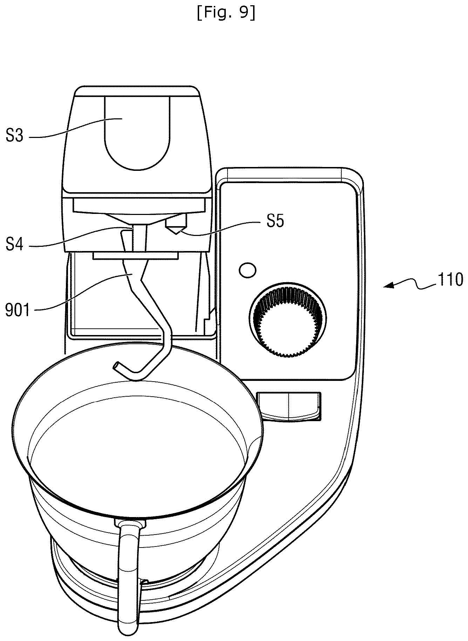

L'appareil électroménager de préparation culinaire 110 comprend aussi une tête 104 qui, dans cet exemple, est articulée sur le socle 101 autour d'un axe horizontal A0, ici au niveau du jambage 108. Dans les cas où la tête 104 est articulée autour de l'axe horizontal A0, elle peut être mobile entre une position relevée, correspondant à l'illustration de la figure 9, dans laquelle le récipient de travail 103 peut être facilement retiré de l'embase 102, et une position de travail, illustrée sur les figures 1, 2, 6 et 8. Les notions de « horizontal », « vertical », « haut » et « bas », et les notions d'orientations qui en découlent, se réfèrent à des orientations normales de l'appareil électroménager de préparation culinaire 110 en situation de fonctionnement lorsque le socle 101 est posé sur un plan de travail horizontal, et correspondent à la représentation des figures.

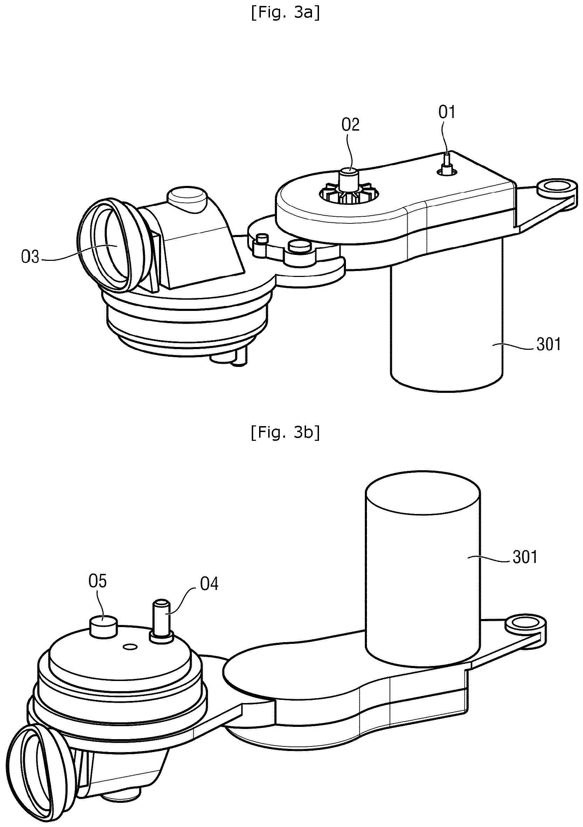

La tête 104 de l'appareil électroménager de préparation culinaire 110 présente une forme qui s'étend selon une direction longitudinale, horizontale en position de travail, avec une portion longitudinale arrière par laquelle elle est liée au jambage 108 du socle 101, et une partie longitudinale avant qui s'étend en surplomb au-dessus de l'embase 102 et du récipient de travail 103. La tête 104 peut renfermer un moteur 301, de préférence un moteur électrique, illustré sur les figures 3a et 3b, dont la mise en marche et la vitesse peuvent être contrôlées par exemple par un dispositif de sélection de vitesse 107 comprenant une pluralité de positions de vitesse. Ce dispositif de sélection de vitesse 107 est par exemple un bouton de commande disposé sur une face du jambage 108. Le moteur 301 agencé à l'intérieur de la tête 104 comporte un arbre moteur orienté selon un axe moteur qui, suivant les conceptions, peut notamment être horizontal ou vertical. En alternative, le moteur 301 peut notamment être agencé dans le socle 101.

La tête 104 comprend au moins une sortie principale et au moins une sortie secondaire. Dans l'exemple illustré aux figures, la tête 104 comprend :
- une première sortie principale S1
- une deuxième sortie principale S2
- une première sortie secondaire S3
- une deuxième sortie secondaire S4 et
- une troisième sortie secondaire S5.

La première sortie principale S1 comprend (ou est associée à) un premier arbre de sortie principal O1 agencé pour être entrainé en rotation par le moteur 301, plus précisément par un arbre de ce moteur 301.

La deuxième sortie principale S2 comprend (ou est associée à) un deuxième arbre de sortie principal O2 agencé pour être entrainé en rotation par le moteur 301, plus précisément par l'arbre de ce moteur 301.

On peut parler de manière équivalente de rotation du moteur ou de rotation de l'arbre du moteur.

La première sortie secondaire S3 comprend (ou est associée à) un premier arbre de sortie secondaire O3 agencé pour être entrainé en rotation par le moteur 301, plus précisément par l'arbre de ce moteur 301.

La deuxième sortie secondaire S4 comprend (ou est associée à) un deuxième arbre de sortie secondaire O4 agencé pour être entrainé en rotation par le moteur 301, plus précisément par l'arbre de ce moteur 301.

La troisième sortie secondaire S5 comprend (ou est associée à) un troisième arbre de sortie secondaire O5 agencé pour être entrainé en rotation par le moteur 301, plus précisément par l'arbre de ce moteur 301.

La tête 104 comprend un premier coupleur principal associé à la première sortie principale S1 et configuré pour permettre un accouplement et un désaccouplement d'un premier accessoire de travail sur la première sortie principale S1 et pour assurer l'entraînement en rotation du premier accessoire de travail via le premier arbre de sortie principal O1.

La tête 104 comprend un deuxième coupleur principal associé à la deuxième sortie principale S2 et configuré pour permettre un accouplement et un désaccouplement d'un deuxième accessoire de travail sur la deuxième sortie principale S2 et pour assurer l'entraînement en rotation du deuxième accessoire de travail via le deuxième arbre de sortie principal O2.

La tête 104 comprend un premier coupleur secondaire associé à la première sortie secondaire S3, et configuré pour permettre un accouplement et un désaccouplement d'un troisième accessoire de travail sur la première sortie secondaire S3 et pour assurer l'entraînement en rotation du troisième accessoire de travail via le premier arbre de sortie secondaire O3.

La tête 104 comprend un deuxième coupleur secondaire associé à la deuxième sortie secondaire S4 et configuré pour permettre un accouplement et un désaccouplement d'un quatrième accessoire de travail sur la deuxième sortie secondaire S4 et pour assurer l'entraînement en rotation du quatrième accessoire de travail via le deuxième arbre de sortie secondaire O4.

La tête 104 comprend un troisième coupleur secondaire associé à la troisième sortie secondaire S5 et configuré pour permettre un accouplement et un désaccouplement d'un cinquième accessoire de travail sur la troisième sortie secondaire S5 et pour assurer l'entraînement en rotation du cinquième accessoire de travail via le troisième arbre de sortie secondaire O5.

Dans ce qui suit l'expression coupleur désigne indistinctement le premier coupleur principal, le deuxième coupleur principal, le premier coupleur secondaire, le deuxième coupleur secondaire ou le troisième coupleur secondaire.

Dans ce qui suit l'expression coupleur principal désigne indistinctement le premier coupleur principal ou le deuxième coupleur principal.

Dans ce qui suit l'expression coupleur secondaire désigne indistinctement le premier coupleur secondaire, le deuxième coupleur secondaire ou le troisième coupleur secondaire.

Dans ce qui suit l'expression sortie désigne indistinctement la première sortie principale S1, la deuxième sortie principale S2, la première sortie secondaire S3, la deuxième sortie secondaire S4 ou la troisième sortie secondaire S5.

Dans ce qui suit l'expression sortie principale désigne indistinctement la première sortie principale S1 ou la deuxième sortie principale S2.

Dans ce qui suit l'expression sortie secondaire désigne indistinctement la première sortie secondaire S3, la deuxième sortie secondaire S4 ou la troisième sortie secondaire S5.

Dans ce qui suit l'expression arbre de sortie désigne indistinctement le premier arbre de sortie principal O1, le deuxième arbre de sortie principal O2, le premier arbre de sortie secondaire O3, le deuxième arbre de sortie secondaire O4 ou le troisième arbre de sortie secondaire O5.

Dans ce qui suit l'expression arbre de sortie principal désigne indistinctement le premier arbre de sortie principal O1 ou le deuxième arbre de sortie principal O2.

Dans ce qui suit l'expression arbre de sortie secondaire désigne indistinctement le premier arbre de sortie secondaire O3, le deuxième arbre de sortie secondaire O4 ou le troisième arbre de sortie secondaire O5.

Deux éléments sont liés de manière amovible s'ils peuvent être accouplés et désaccouplés, ou accrochés et décrochés, de manière simple par un utilisateur final de l'appareil électroménager de préparation culinaire 110. De préférence, ces opérations pourront se faire sans outil, ou alors avec l'aide d'un ou plusieurs outil(s) selon un mode opératoire très simple. Le mode opératoire pour accoupler et désaccoupler, et/ou pour accrocher et décrocher deux éléments liés de manière amovible comporte de préférence un unique geste, par exemple pousser ou tirer ou tourner ou visser, etc., ou une combinaison de deux gestes tels que pousser-tourner, tirer-visser, pousser-visser, etc. Une liaison amovible sera ainsi à distinguer d'une liaison démontable, une liaison démontable étant prévue par exemple pour permettre des opérations de maintenance ou de réparation sur des organes internes de l'appareil électroménager de préparation culinaire 110, nécessitant généralement des outils et nécessitant généralement plusieurs opérations successives pour permettre un démontage, et étant réservée par exemple à un réparateur, en dehors d'une utilisation habituelle de l'appareil électroménager de préparation culinaire 110.

Les coupleurs peuvent être formés d'une série de pattes d'accrochage qui s'étendent depuis l'accessoire de travail et qui sont destinées à s'engager dans les lumières aménagées dans une paroi d'un carter de la tête 104. Ainsi les pattes d'accrochage coopèrent avec les lumières. De plus les pattes d'accrochage ou les lumières peuvent comporter des moyens d'encliquetage ou d'emboîtement élastique. Les coupleurs peuvent prendre une autre forme, par exemple la forme d'un accrochage à baïonnette, la forme d'un ou plusieurs crochets d'accrochage, ou la forme d'un pas de vis.

L'arbre d'entrée rotatif de l'accessoire de travail peut, par exemple, présenter une forme complémentaire de celle de l'arbre de sortie principal ou l'arbre de sortie secondaire, avec par exemple un carré mâle et un carré femelle complémentaires l'un de l'autre, ou encore tout autre accouplement mécanique permettant de transmettre un couple en rotation. De préférence, ceci est réalisé par simple engagement de formes complémentaires, sans nécessiter d'intervention avec un outil.

Généralement en position de travail, le quatrième accessoire de travail accouplé sur la deuxième sortie secondaire S4 ou le cinquième accessoire de travail accouplé sur la troisième sortie secondaire S5 est engagé à l'intérieur du récipient de travail 103 pour agir sur des aliments contenus dans le récipient de travail 103.

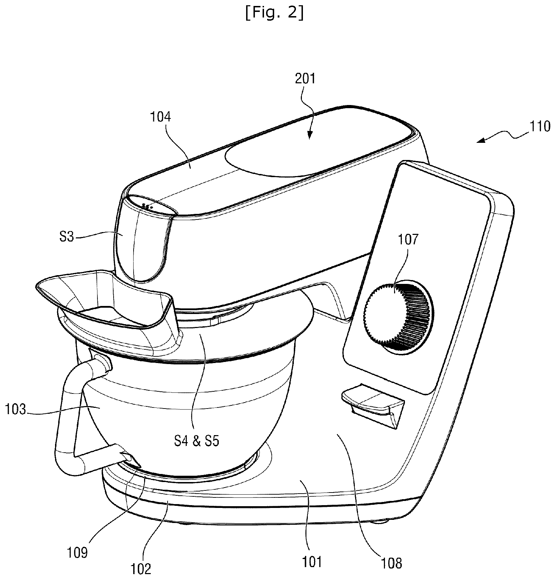

L'appareil électroménager de préparation culinaire 110 comprend une trappe 201 représentée sur la figure 2. Cette trappe 201 est mobile ou amovible et peut occuper une position d'obturation, dans laquelle la trappe 201 montée sur la tête 104 empêche l'accès à la première sortie principale S1 et à la deuxième sortie principale S2. La figure 2 représente l'appareil électroménager dans une configuration dans laquelle la trappe 201 est en position d'obturation.

La figure 1 représente l'appareil électroménager de préparation culinaire 110 dans une autre configuration dans laquelle la trappe 201 a été retirée de la tête 104. Sur la figure 1, la première sortie principale S1 et la deuxième sortie principale S2 sont sur la face supérieure de la tête 104, la première sortie secondaire S3 est sur l'avant de l'appareil, par exemple pour l'accouplement d'un accessoire de type râpe ou de type hachoir à vis (« meat mincer » en anglais), et la deuxième sortie secondaire S4 et la troisième sortie secondaire S5 sont sur la face inférieure, par exemple pour l'accouplement d'un accessoire de type pâtisserie, tel qu'un outil fouet, un outil pétrin ou un outil malaxeur.

Les figures 3a et 3b représentent, respectivement en vue de dessus et de dessous, un dispositif d'entrainement permettant l'entrainement du premier arbre de sortie principal O1, du deuxième arbre de sortie principal O2, du premier arbre de sortie secondaire O3, du deuxième arbre de sortie secondaire O4 et du troisième de sortie secondaire O5 par l'arbre du moteur 301. Ce dispositif d'entrainement comprend généralement un dispositif de réduction afin que la vitesse de rotation du deuxième arbre de sortie principal O2 et que la vitesse de rotation de chacun des arbres de sortie secondaires O3, O4 et O5 soit inférieure à la vitesse de rotation du moteur 301. Le premier arbre de sortie principal O1 tourne à la même vitesse que le moteur 301. De plus dans un exemple de réalisation le réducteur est configuré pour que le premier arbre de sortie secondaire O3, le deuxième arbre de sortie secondaire O4 et le troisième arbre de sortie secondaire O5 tournent moins vite que le deuxième arbre de sortie principal O2.

Dans un exemple de réalisation, une ou plusieurs parmi la deuxième sortie secondaire S4 et la troisième sortie secondaire S5 comprennent un coupleur excentrique permettant l'entraînement d'un accessoire de travail selon un mouvement satellitaire combinant deux rotations autour de deux axes parallèles. Ces coupleurs excentriques sont particulièrement avantageux pour les accessoires couplés à la deuxième sortie secondaire S4 ou la troisième sortie secondaire S5 et fonctionnant dans le récipient de travail 103. Ils permettent par exemple d'entrainer en rotation un outil pétrisseur ou un fouet adapté pour le malaxage de pâtes ou le mixage d'ingrédients dans le récipient de travail 103. Dans ce cas l'appareil électroménager de préparation culinaire 110 est aussi désigné par l'appellation de « robot pâtissier », même s'il peut souvent être utilisés pour des préparations autres que la pâtisserie.

L'appareil électroménager de préparation culinaire 110 comprend également un dispositif de détection 106 de la position de la trappe 201.

Dans un exemple de réalisation le dispositif de détection 106 comprend un interrupteur positionné dans la tête 104, l'interrupteur étant actionné par la trappe 201 lorsque la trappe 201 est montée sur la tête 104 et donc occupe la position d'obturation.

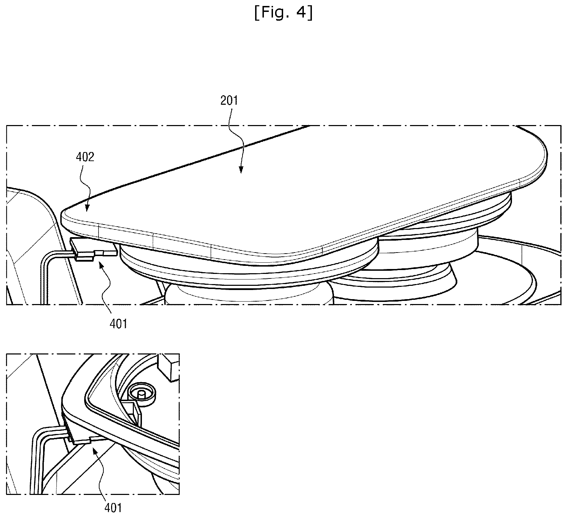

La figure 4 représente le dispositif de détection 106. Ce dispositif de détection 106 comprend par exemple un capteur à effet Hall 401 et un aimant 402.

Sur la figure 4, l'aimant 402 est positionné sur la trappe 201 mais il est possible d'inverser sa position avec celle du capteur à effet Hall 401.

L'appareil électroménager de préparation culinaire 110 comprend une unité de commande.

L'unité de commande est configurée pour commander une valeur de vitesse de rotation de l'arbre du moteur 301 en fonction de la position de vitesse du dispositif de sélection de vitesse 107.

L'unité de commande est aussi configurée, pour au moins une des positions de vitesse, pour commander :
- une première valeur de vitesse de rotation non nulle de l'arbre du moteur 301 lorsque la trappe 201 occupe la position d'obturation ;
- une deuxième valeur de vitesse de rotation non nulle de l'arbre du moteur 301 lorsque la trappe 201 n'occupe pas la position d'obturation, la deuxième valeur de vitesse de rotation non nulle de l'arbre du moteur 301 étant différente de la première valeur de vitesse de rotation non nulle de l'arbre du moteur 301.

Ainsi l'appareil électroménager de préparation culinaire 110 utilise une première gamme de valeurs de vitesse de rotation du moteur 301 lorsque la trappe 201 occupe la position d'obturation, et une deuxième gamme de valeurs de vitesse de rotation du moteur 301 lorsque la trappe 201 n'occupe pas la position d'obturation. Au moins une des premières valeurs de vitesse de rotation du moteur 301, de la première gamme de vitesses étant différente de la deuxième valeur de vitesse de rotation du moteur 301, correspondante de la deuxième gamme de valeurs de vitesse de rotation du moteur 301.

L'une des positions de vitesse peut par exemple correspondre à la position de vitesse de rotation maximale du moteur 301.

Pour au moins une des positions de vitesse, la première valeur de vitesse de rotation du moteur 301 peut par exemple être inférieure à la deuxième valeur de vitesse de rotation du moteur 301.

Dans un exemple de réalisation, pour toutes les positions de vitesse du dispositif de sélection de vitesse 107, la première valeur de vitesse de rotation du moteur 301 est inférieure ou égale à la deuxième valeur de vitesse de rotation du moteur 301.

Dans un exemple de réalisation, l'écart, entre la première valeur de vitesse de rotation du moteur 301 et la deuxième valeur de vitesse de rotation du moteur 301, est maximal lorsque la position de vitesse est la plus élevée.

L'écart entre la première valeur de vitesse de rotation du moteur 301 et la deuxième valeur de vitesse de rotation du moteur 301 peut par exemple être compris entre 300 tours/minute et 3000 tours/minute ou être compris entre 1000 tours/minute et 2000 tours/minute.

Dans un exemple de réalisation, pour certaines des positions de vitesse du dispositif de sélection de vitesse 107, la première valeur de vitesse de rotation du moteur 301 est inférieure à la deuxième valeur de vitesse de rotation du moteur 301. Pour d'autres positions de vitesse du dispositif de sélection de vitesse 107, la première valeur de vitesse de rotation du moteur 301 et la deuxième valeur de vitesse de rotation du moteur 301 sont identiques.

Dans un exemple de réalisation, la première valeur de vitesse de rotation du moteur 301 et la deuxième valeur de vitesse de rotation du moteur 301 sont identiques, lorsque la vitesse de rotation du moteur 301 est inférieure à 5000 tours/minute, plus précisément lorsque la vitesse de rotation du moteur 301 est inférieure ou égale à 4300 tours/minute.

L'unité de commande peut par exemple permettre de commander une vitesse de rotation du moteur 301 comprise entre 1700 tours/min et 15000 tours/min.

Le tableau ci-dessous donne un premier exemple de valeurs de vitesses de rotation du moteur 301 en fonction de la position de la trappe 201 pour différentes positions de vitesse du dispositif de sélection de vitesse 107.

**[Tab 1]**

| Positions de vitesse du dispositif de sélection | Premières valeurs de vitesses du moteur (tours/minute) lorsque la trappe occupe la position d'obturation | Deuxièmes valeurs de vitesses du moteur (tours/minute) lorsque la trappe n'occupe pas la position d'obturation |
|---|---|---|
| Incorporation (0) | 1700 | 1700 |
| 1 | 2700 | 2700 |
| 3 | 3500 | 3500 |
| 3 | 4300 | 4300 |
| 4 | 5000 | 5500 |
| 5 | 6200 | 6500 |
| 6 | 7500 | 8000 |
| 7 | 8800 | 10000 |
| 8 | 10000 | 12000 |
| Pulse (9) | 12000 | 15000 |

Le tableau ci-dessous donne un deuxième exemple de valeurs de vitesses de rotation du moteur 301 en fonction de la position de la trappe 201 pour différentes positions de vitesse du dispositif de sélection de vitesse 107.

**[Tab 2]**

| Positions de vitesse du dispositif de sélection | Premières valeurs de vitesses du moteur (tours/minute) lorsque la trappe occupe la position d'obturation | Deuxièmes valeurs de vitesses du moteur (tours/minute) lorsque la trappe n'occupe pas la position d'obturation |
|---|---|---|
| Incorporation (0) | 1700 | 1700 |
| 1 | 2700 | 2700 |
| 3 | 3500 | 3500 |
| 3 | 4300 | 4300 |
| 4 | 5000 | 5500 |
| 5 | 6500 | 6500 |
| 6 | 8000 | 8000 |
| 7 | 9000 | 10000 |
| 8 | 10000 | 12000 |
| Pulse (9) | 12000 | 15000 |

Dans l'exemple de ce deuxième tableau les premières valeurs de vitesses de rotation du moteur 301 sont différentes, pour les positions de vitesse 4, 7 et 8, des premières valeurs de vitesses de rotation du moteur 301, de l'exemple du premier tableau, ce qui offre l'avantage d'avoir un étagement plus progressif des vitesses.

Dans les deux exemples de réalisation du premier tableau et du deuxième tableau, en position de vitesse « pulse (9) » :
- la première valeur de vitesse de rotation du moteur 301 égale à 12000 tours/minute est suffisante pour permettre la réalisation de pâtes légères au malaxeur,
- la deuxième valeur de vitesse de rotation du moteur 301 égale à 15000 tours/minute permet d'améliorer les performances lorsqu'un mini-hacheur ou un égraineur (grinder en anglais) est utilisé.

L'unité de commande comprend un processeur pour mettre en œuvre un programme d'ordinateur. Ce programme d'ordinateur comprend des instructions de code de programme pour commander la vitesse de rotation du moteur 301 en fonction de la position de la trappe 201 et de la position de vitesse du dispositif de sélection de vitesse 107. Par ailleurs, l'unité de commande positif comprend également une mémoire pour mémoriser, entre autres, les différentes vitesses à commander.

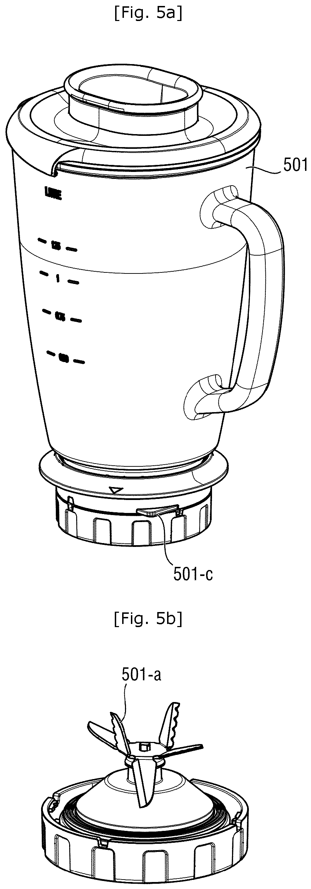

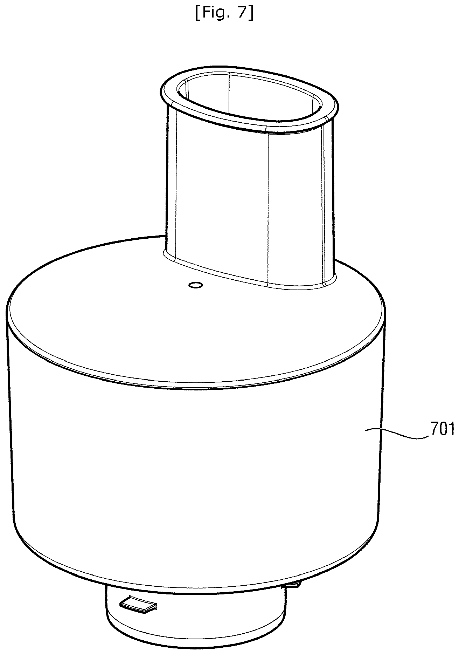

Les accessoires associés à la première sortie principale S1 et à la deuxième sortie principale S2 sont par exemple un bol blender 501 représenté sur les figures 5a à 5c, associé à la première sortie principale S1, ou un bol mini-hachoir 701 représenté sur la figure 7, associé à la deuxième sortie principale S2.

Ces accessoires nécessitent des vitesses de rotation élevées. Ils se présentent sous la forme d'accessoires prévus pour être entraînés par l'appareil électroménager de préparation culinaire 110. De tels accessoires ont en commun le fait d'avoir une enceinte refermable délimitant un espace interne fermé destiné à accueillir des aliments à préparer. De tels accessoires comportent un outil coupant rotatif qui est entrainé en rotation autour d'un axe d'outil, généralement vertical. L'outil coupant est contenu dans l'espace interne fermé et présente un moyeu central et au moins une lame coupante s'étendant radialement par rapport à l'axe d'outil depuis le moyeu central. De tels accessoires sont généralement appelés mini-hachoirs lorsqu'ils sont destinés à hacher des produits solides, ou blenders lorsqu'ils sont destinés à la préparation d'aliments liquides. Dans certains modes de réalisation, cette enceinte refermable peut être formée d'un réceptacle présentant une ouverture supérieure pour introduire des aliments à préparer et d'un couvercle amovible qui est prévu pour refermer l'espace interne fermé dans lequel sont enfermés les aliments à préparer lors du fonctionnement. Dans d'autres modes de réalisation, cette enceinte refermable peut être formée d'une embase porte-outil et d'une cloche qui vient se raccorder sur l'embase porte outil pour former l'enceinte refermable en configuration fermée. L'outil coupant est généralement placé près d'une paroi inférieure de l'enceinte refermable, c'est-à-dire près d'une paroi inférieure du réceptacle ou près de l'embase porte-outil. L'outil coupant est généralement porté directement ou indirectement, par exemple par l'intermédiaire d'un coupleur, par cette paroi inférieure. Dans ces accessoires, l'action de découpe des aliments n'est pas due, contrairement à d'autres accessoires ou appareils culinaires, au cisaillement de l'aliment entre une lame et une contre-lame ou autre surface. L'action de découpe des aliments est due à la vitesse de la lame. On comprend donc que, dans ces accessoires, l'outil coupant doit être entraîné à une vitesse à vide importante, de préférence supérieure ou égale à 5000 tours par minute, plus préférentiellement supérieure ou égale à 10000 tours par minute. On comprend aussi que de tels accessoires doivent être orientés, en fonctionnement, de telle sorte que l'outil coupant soit agencé dans une portion inférieure de l'enceinte refermable, et mobile en rotation selon un axe d'outil orienté selon la direction verticale, ou selon une direction principalement verticale, c'est-à-dire faisant un angle inférieur à 45° avec la direction verticale.

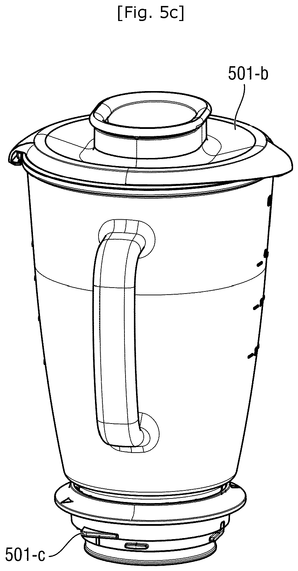

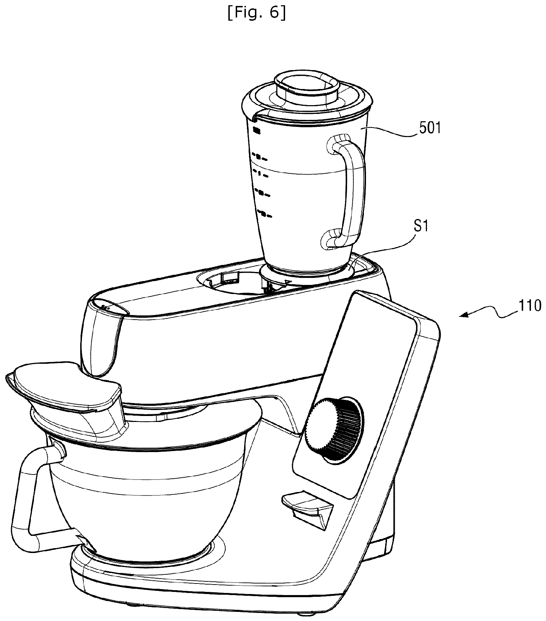

La première sortie principale S1 peut recevoir le bol blender 501. Dans l'exemple de réalisation illustré, le bol blender 501 comprend une embase porte-outil 501-a (représentée sur la figure 5b) amovible par rapport à une partie bol 501-b (représentée sur la figure 5c). La partie bol 501-b comprend à sa base des pattes d'actionnement 501-c (par exemple au nombre de 3 et placées à 120°, ou de 2 placées à 180° comme visible sur les figures 5a et 5c sur lesquelles une des pattes 501-c est visible). La figure 6 représente le bol blender 501 et l'appareil électroménager de préparation culinaire 110, lorsque le bol blender 501 est lié par à la première sortie principale S1 à l'appareil électroménager de préparation culinaire 110.

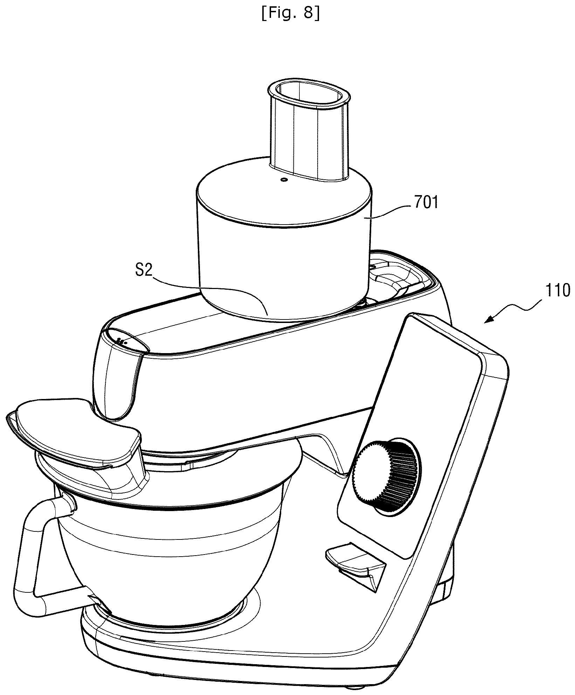

La deuxième sortie principale S2 peut recevoir le bol mini-hachoir 701, aussi connu sous l'expression anglaise de « food processor », illustré sur la figure 7. La figure 8 représente le bol mini-hachoir 701 et l'appareil électroménager de préparation culinaire 110, lorsque le bol mini-hachoir 701 est lié par la deuxième sortie principale S2 à l'appareil électroménager de préparation culinaire 110.

La première sortie principale S1 et/ou la deuxième sortie principale S2 peuvent aussi recevoir d'autres accessoires, par exemple un presse-agrume ou une centrifugeuse.

Les accessoires associés à la première sortie secondaire S3 sont par exemple une tête hachoir, un accessoire pour râper ou émincer (shredder en anglais), un accessoire à pâtes ou pour former des pâtes (pasta maker en anglais), ou un accessoire de pressage pour obtenir des jus et/ou des coulis, procurant ainsi une grande polyvalence d'utilisation.

La deuxième sortie secondaire S3 est généralement entraînée en rotation à une vitesse de rotation comprise entre 50 et 200 tours par minute, par l'intermédiaire du dispositif de réduction. De plus, une des positions de vitesse les plus basses peut être utilisée pour ces accessoires. Ces vitesses sont bien adaptées à certains travaux culinaires, et donc à certains accessoires prévus pour ces travaux.

Les accessoires associés à la deuxième sortie secondaire S4 et à la troisième sortie secondaire S5 sont par exemple un fouet, un malaxeur et un crochet pour pâte à pain 901, représenté sur la figure 9. Sur la figure 9 le crochet pour pâte à pain 901 est lié à l'appareil électroménager de préparation culinaire 110 par la deuxième sortie principale S4.

## Revendications

1. Appareil électroménager de préparation culinaire (110) comprenant :
- un moteur (301),
- une sortie principale (S1 ou S2) comprenant un arbre de sortie principal (O1 ou O2) agencé pour être entrainé en rotation par le moteur (301),
- une trappe (201) mobile ou amovible pouvant occuper une position d'obturation dans laquelle la trappe (201) empêche l'accès à la sortie principale (S1 ou S2),
- un dispositif de détection (106) de la position de la trappe (201),
- un dispositif de sélection de vitesse (107) comprenant une pluralité de positions de vitesse et
- une unité de commande configurée pour commander une vitesse de rotation du moteur (301) en fonction de la position de vitesse du dispositif de sélection de vitesse (107),
**caractérisé en ce que** l'unité de commande est en outre configurée, pour au moins une des positions de vitesse, pour commander :
- une première vitesse de rotation du moteur (301) lorsque la trappe (201) occupe la position d'obturation et
- une deuxième vitesse de rotation du moteur (301) lorsque la trappe (201) n'occupe pas la position d'obturation,
la première vitesse de rotation du moteur (301) étant différente de la deuxième vitesse de rotation du moteur (301), la première vitesse de rotation du moteur (301) et la deuxième vitesse de rotation du moteur (301) étant non nulles.

2. Appareil électroménager de préparation culinaire (110) selon la revendication 1, comprenant en outre:
- une sortie secondaire (S3, S4 ou S5) comprenant :
- un arbre de sortie secondaire (O3, O4 ou O5) agencé pour être entrainé en rotation par le moteur (301).

3. Appareil électroménager de préparation culinaire (110) selon l'une quelconque des revendications 1 ou 2, dans lequel ladite au moins une des positions de vitesse correspond à la position de vitesse de rotation maximale du moteur (301).

4. Appareil électroménager de préparation culinaire (110) selon l'une quelconque des revendications 1 à 3, dans lequel la première vitesse de rotation du moteur (301) est inférieure à la deuxième vitesse de rotation du moteur (301).

5. Appareil électroménager de préparation culinaire (110) selon l'une quelconque des revendications 1 à 4, dans lequel un écart entre la première vitesse de rotation du moteur (301) et la deuxième vitesse de rotation du moteur (301) est maximal lorsque la position de vitesse est la plus élevée.

6. Appareil électroménager de préparation culinaire (110) selon l'une quelconque des revendications 1 à 5, dans lequel un écart entre la première vitesse de rotation du moteur (301) et la deuxième vitesse de rotation du moteur (301) est compris entre 300 tours/minute et 3000 tours/minute, de préférence compris entre 1000 tours/minute et 2000 tours/minute.

7. Appareil électroménager de préparation culinaire (110) selon l'une quelconque des revendications 1 à 6, dans lequel l'unité de commande est configurée pour que, pour plusieurs positions de vitesse de la pluralité de positions de vitesse, la première vitesse de rotation du moteur (301) et la deuxième vitesse de rotation du moteur (301) soient différentes et pour que, pour les autres positions de vitesse de la pluralité de positions de vitesse, la première vitesse de rotation du moteur (301) et la deuxième vitesse de rotation du moteur (301) soient identiques.

8. Appareil électroménager de préparation culinaire (110) selon la revendication 7, dans lequel l'unité de commande est configurée pour que la première vitesse de rotation du moteur (301) et la deuxième vitesse de rotation du moteur (301) soient identiques, lorsque la vitesse de rotation du moteur (301) est inférieure à 5000 tours/minute.

9. Appareil électroménager de préparation culinaire (110), selon l'une quelconque des revendications 1 à 8, dans lequel l'unité de commande est configurée pour commander la vitesse de rotation du moteur (301) entre 1700 tours/min et 15000 tours/min.

10. Appareil électroménager de préparation culinaire (110), selon l'une quelconque des revendications 2 à 9, comprenant en outre :
- un socle (101) présentant une embase (102) ayant une zone d'accueil configurée pour recevoir un récipient de travail (103) et
- une tête (104) liée au socle (101) et comprenant :
- la sortie principale (S1 ou S2),
- un coupleur principal configuré pour permettre un accouplement et un désaccouplement d'un premier accessoire de travail sur la sortie principale (S2 ou S2) et pour assurer l'entraînement en rotation du premier accessoire de travail via l'arbre de sortie principal (O1 ou O2),
- la sortie secondaire (S3, S4 ou S5) et
- un coupleur secondaire configuré pour permettre un accouplement et un désaccouplement d'un deuxième accessoire de travail sur la sortie secondaire (S3, S4 ou S5) et pour assurer l'entraînement en rotation du deuxième accessoire de travail via l'arbre de sortie secondaire (O3, 04 ou O5).

11. Appareil électroménager de préparation culinaire (110), selon la revendication 10, dans lequel la sortie secondaire (S3, S4 ou S5) est une première sortie secondaire (S3), l'arbre de sortie secondaire (O3, O4 ou O5) est un premier arbre de sortie secondaire (O3), le coupleur secondaire est un premier coupleur secondaire, la tête (104) comprenant en outre une deuxième sortie secondaire (S4) comprenant un deuxième arbre de sortie secondaire (O4) agencé pour être entrainé en rotation par le moteur (301), la tête (104) comprenant en outre un deuxième coupleur secondaire configuré pour permettre un accouplement et un désaccouplement du deuxième accessoire de travail sur la deuxième sortie secondaire (S3, S4 ou S5) et pour assurer l'entraînement en rotation du deuxième accessoire de travail via le deuxième arbre de sortie secondaire (O3, 04 ou O5),
la deuxième sortie secondaire (S4) étant agencée sous la tête (104) ou à une extrémité frontale de la tête (104).

12. Appareil électroménager de préparation culinaire (110), selon la revendication 11 dans lequel :
- le premier arbre de sortie secondaire (O3) est agencé pour être entrainé en rotation par le moteur (301) via un réducteur, de sorte que le premier arbre de sortie secondaire (O3) tourne moins vite que l'arbre de sortie principal (O1, O2) et/ou
- le deuxième arbre de sortie secondaire (O4) est agencé pour être entrainé en rotation par le moteur (301) via un réducteur, de sorte que le deuxième arbre de sortie secondaire (O4) tourne moins vite que l'arbre de sortie principal (O1, O2).

13. Appareil électroménager de préparation culinaire (110), selon l'une quelconque des revendications 10 à 12, dans lequel le dispositif de détection (106) comprend un capteur à effet Hall (401) et un aimant (402), l'aimant (402) étant positionné sur la trappe (201), le capteur à effet Hall (401) étant positionné dans la tête (104).

14. Appareil électroménager de préparation culinaire (110), selon l'une quelconque des revendications 10 à 12, dans lequel le dispositif de détection (106) comprend un interrupteur positionné dans la tête (104), l'interrupteur étant actionné par la trappe (201) lorsque la trappe (201) occupe la position d'obturation.

## Patentansprüche

1. Elektrisches Haushaltsgerät zur Nahrungszubereitung (110), umfassend:
- einen Motor (301),
- einen Hauptausgang (S1 oder S2), der eine Hauptausgangswelle (O1 oder O2) umfasst, die eingerichtet ist, um von dem Motor (301) rotatorisch angetrieben zu werden,
- eine bewegliche oder abnehmbare Klappe (201), die eine Verschlussposition einnehmen kann, in der die Klappe (201) den Zugang zum Hauptausgang (S1 oder S2) verhindert,
- eine Vorrichtung zur Erfassung (106) der Position der Klappe (201),
- eine Vorrichtung zur Auswahl der Drehzahl (107), die eine Vielzahl von Drehzahlpositionen umfasst und
- eine Steuereinheit, die ausgelegt ist, um eine Drehzahl des Motors (301) in Abhängigkeit von der Drehzahlposition der Vorrichtung zur Auswahl der Drehzahl (107) zu steuern,
**dadurch gekennzeichnet, dass** die Steuereinheit ferner ausgelegt ist, um für mindestens eine der Drehzahlpositionen zu steuern:
- eine erste Drehzahl des Motors (301), wenn die Klappe (201) die Verschlussposition einnimmt und
- eine zweite Drehzahl des Motors (301), wenn die Klappe (201) nicht die Verschlussposition einnimmt,
wobei die erste Drehzahl des Motors (301) von der zweiten Drehzahl des Motors (301) verschieden ist, wobei die erste Drehzahl des Motors (301) und die zweite Drehzahl des Motors (301) ungleich Null sind.

2. Elektrisches Haushaltsgerät zur Nahrungszubereitung (110) nach Anspruch 1, das ferner umfasst:
- einen sekundären Ausgang (S3, S4 oder S5), der umfasst:
- eine sekundäre Ausgangswelle (O3, O4 oder O5), die eingerichtet ist, um von dem Motor (301) rotatorisch angetrieben zu werden.

3. Elektrisches Haushaltsgerät zur Nahrungszubereitung (110) nach einem der Ansprüche 1 oder 2, wobei die mindestens eine der Drehzahlpositionen der Position der maximalen Drehzahl des Motors (301) entspricht.

4. Elektrisches Haushaltsgerät zur Nahrungszubereitung (110) nach einem der Ansprüche 1 bis 3, wobei die erste Drehzahl des Motors (301) niedriger ist als die zweite Drehzahl des Motors (301).

5. Elektrisches Haushaltsgerät zur Nahrungszubereitung (110) nach einem der Ansprüche 1 bis 4, wobei eine Abweichung zwischen der ersten Drehzahl des Motors (301) und der zweiten Drehzahl des Motors (301) maximal ist, wenn die Drehzahlposition am höchsten ist.

6. Elektrisches Haushaltsgerät zur Nahrungszubereitung (110) nach einem der Ansprüche 1 bis 5, wobei eine Abweichung zwischen der ersten Drehzahl des Motors (301) und der zweiten Drehzahl des Motors (301) zwischen 300 U/min und 3000 U/min, vorzugsweise zwischen 1000 U/min und 2000 U/min, liegt.

7. Elektrisches Haushaltsgerät zur Nahrungszubereitung (110) nach einem der Ansprüche 1 bis 6, wobei die Steuereinheit ausgelegt ist, damit für mehrere Drehzahlpositionen der Vielzahl von Drehzahlpositionen die erste Drehzahl des Motors (301) und die zweite Drehzahl des Motors (301) unterschiedlich sind und damit für die anderen Drehzahlpositionen der Vielzahl von Drehzahlpositionen die erste Drehzahl des Motors (301) und die zweite Drehzahl des Motors (301) identisch sind.

8. Elektrisches Haushaltsgerät zur Nahrungszubereitung (110) nach Anspruch 7, wobei die Steuereinheit ausgelegt ist, damit die erste Drehzahl des Motors (301) und die zweite Drehzahl des Motors (301) identisch sind, wenn die Drehzahl des Motors (301) unter 5000 U/min liegt.

9. Elektrisches Haushaltsgerät zur Nahrungszubereitung (110) nach einem der Ansprüche 1 bis 8, wobei die Steuereinheit ausgelegt ist, um die Drehzahl des Motors (301) zwischen 1700 U/min und 15000 U/min zu steuern.

10. Elektrisches Haushaltsgerät zur Nahrungszubereitung (110) nach einem der Ansprüche 2 bis 9, das ferner umfasst:
- einen Sockel (101), der eine Grundplatte (102) aufweist, mit einem Aufnahmebereich, der zur Aufnahme eines Arbeitsbehälters (103) ausgelegt ist und
- einen Kopf (104), der mit dem Sockel (101) verbunden ist und umfasst:
- den Hauptausgang (S1 oder S2),
- einen Hauptkoppler, der ausgelegt ist, um ein An- und Abkoppeln eines ersten Arbeitszubehörs am Hauptausgang (S2 oder S2) zu ermöglichen und um den Rotationsantrieb des ersten Arbeitszubehörs über die Hauptausgangswelle (O1 oder O2) sicherzustellen,
- den sekundären Ausgang (S3, S4 oder S5) und
- einen sekundären Koppler, der ausgelegt ist, um ein An- und Abkoppeln eines zweiten Arbeitszubehörs am sekundären Ausgang (S3, S4 oder S5) zu ermöglichen und um den Rotationsantrieb des zweiten Arbeitszubehörs über die sekundäre Ausgangswelle (O3, O4 oder O5) sicherzustellen.

11. Elektrisches Haushaltsgerät zur Nahrungszubereitung (110) nach Anspruch 10, wobei der sekundäre Ausgang (S3, S4 oder S5) ein erster sekundärer Ausgang (S3) ist, die sekundäre Ausgangswelle (O3, O4 oder O5) eine erste sekundäre Ausgangswelle (O3) ist, der sekundäre Koppler ein erster sekundärer Koppler ist, wobei der Kopf (104) ferner einen zweiten sekundären Ausgang (S4) umfasst, der eine zweite sekundäre Ausgangswelle (O4) umfasst, die eingerichtet ist, um von dem Motor (301) rotatorisch angetrieben zu werden, wobei der Kopf (104) ferner einen zweiten sekundären Koppler umfasst, der ausgelegt ist, um ein An- und ein Abkoppeln des zweiten Arbeitszubehörs am zweiten sekundären Ausgang (S3, S4 oder S5) zu ermöglichen und um den Rotationsantrieb des zweiten Arbeitszubehörs über die zweite sekundäre Ausgangswelle (O3, O4 oder O5) sicherzustellen,
wobei der zweite sekundäre Ausgang (S4) unter dem Kopf (104) oder an einem stirnseitigen Ende des Kopfes (104) eingerichtet ist.

12. Elektrisches Haushaltsgerät zur Nahrungszubereitung (110) nach Anspruch 11, wobei:
- die erste sekundäre Ausgangswelle (O3) eingerichtet ist, um vom Motor (301) über ein Untersetzungsgetriebe rotatorisch angetrieben zu werden, so dass sich die erste sekundäre Ausgangswelle (O3) langsamer dreht als die Hauptausgangswelle (O1, O2) und/oder
- die zweite sekundäre Ausgangswelle (O4) eingerichtet ist, um vom Motor (301) über ein Untersetzungsgetriebe rotatorisch angetrieben zu werden, so dass die zweite sekundäre Ausgangswelle (O4) langsamer dreht als die Hauptausgangswelle (O1, O2).

13. Elektrisches Haushaltsgerät zur Nahrungszubereitung (110) nach einem der Ansprüche 10 bis 12, wobei die Erfassungsvorrichtung (106) einen Hall-Effekt-Sensor (401) und einen Magneten (402) umfasst, wobei der Magnet (402) an der Klappe (201) positioniert ist, wobei der Hall-Effekt-Sensor (401) im Kopf (104) positioniert ist.

14. Elektrisches Haushaltsgerät zur Nahrungszubereitung (110) nach einem der Ansprüche 10 bis 12, wobei die Erfassungsvorrichtung (106) einen im Kopf (104) positionierten Schalter umfasst, wobei der Schalter durch die Klappe (201) betätigt wird, wenn die Klappe (201) die Verschlussposition einnimmt.

## Claims

1. Household appliance for food preparation (110) comprising:
- a motor (301),
- a main output (S1 or S2) comprising a main output shaft (O1 or O2) arranged to be rotatably driven by the motor (301),
- a movable or removable flap (201) which can occupy a blocking position in which the flap (201) prevents access to the main output (S1 or S2),
- a detection device (106) for detecting the position of the flap (201),
- a speed selection device (107) comprising a plurality of speed positions and
- a control unit configured to control a speed of rotation of the motor (301) as a function of the speed position of the speed selection device (107),
**characterised in that** the control unit is further configured, for at least one of the speed positions, to control:
- a first speed of rotation of the motor (301) when the flap (201) is in the blocking position, and
- a second speed of rotation of the motor (301) when the flap (201) is not in the blocking position,
the first speed of rotation of the motor (301) being different from the second speed of rotation of the motor (301), the first speed of rotation of the motor (301) and the second speed of rotation of the motor (301) being non-zero.

2. Household appliance for food preparation (110) according to claim 1, further comprising:
- a secondary output (S3, S4 or S5) comprising:
- a secondary output shaft (O3, O4 or O5) arranged to be rotatably driven by the motor (301).

3. Household appliance for food preparation (110) according to any one of claims 1 or 2, wherein said at least one of the speed positions corresponds to the position of maximum speed of rotation of the motor (301).

4. Household appliance for food preparation (110) according to any one of claims 1 to 3, wherein the first speed of rotation of the motor (301) is lower than the second speed of rotation of the motor (301).

5. Household appliance for food preparation (110) according to any one of claims 1 to 4, wherein a difference between the first speed of rotation of the motor (301) and the second speed of rotation of the motor (301) is maximum when the speed position is highest.

6. Household appliance for food preparation (110) according to any one of claims 1 to 5, in which a difference between the first speed of rotation of the motor (301) and the second speed of rotation of the motor (301) is between 300 rpm and 3000 rpm, preferably between 1000 rpm and 2000 rpm.

7. Household appliance for food preparation (110) according to any one of claims 1 to 6, wherein the control unit is configured so that, for several speed positions of the plurality of speed positions, the first speed of rotation of the motor (301) and the second speed of rotation of the motor (301) are different and so that, for the other speed positions of the plurality of speed positions, the first speed of rotation of the motor (301) and the second speed of rotation of the motor (301) are identical.

8. Household appliance for food preparation (110) according to claim 7, in which the control unit is configured so that the first speed of rotation of the motor (301) and the second speed of rotation of the motor (301) are identical, when the speed of rotation of the motor (301) is less than 5000 rpm.

9. Household appliance for food preparation (110) according to any one of claims 1 to 8, wherein the control unit is configured to control the speed of rotation of the motor (301) between 1700 rpm and 15000 rpm.

10. Household appliance for food preparation (110) according to any one of claims 2 to 9, further comprising:
- a base (101) having a base plate (102) with a receiving area configured to receive a work container (103) and
- a head (104) connected to the base (101) and comprising:
- the main output (S1 or S2),
- a main coupler configured to enable a first work accessory to be coupled to and uncoupled from the main output (S2 or S2) and to drive the first work accessory in rotation via the main output shaft (O1 or O2),
- the secondary output (S3, S4 or S5) and
- a secondary coupler configured to enable a second work accessory to be coupled to and uncoupled from the secondary output (S3, S4 or S5) and to drive the second work accessory in rotation via the secondary output shaft (O3, 04 or O5).

11. Household appliance for food preparation (110) according to claim 10, in which the secondary output (S3, S4 or S5) is a first secondary output (S3), the secondary output shaft (O3, O4 or O5) is a first secondary output shaft (O3), the secondary coupler is a first secondary coupler, the head (104) further comprising a second secondary output (S4) comprising a second secondary output shaft (O4) arranged to be rotatably driven by the motor (301),
the head (104) further comprising a second secondary coupler configured to allow the second work accessory to be coupled to and uncoupled from the second secondary output (S3, S4 or S5) and to drive the second work accessory in rotation via the second secondary output shaft (O3, O4 or O5),
the second secondary outlet (S4) being arranged under the head (104) or at a front end of the head (104).

12. Household appliance for food preparation (110) according to claim 11 in which:
- the first secondary output shaft (O3) is arranged to be rotated by the motor (301) via a gearbox, so that the first secondary output shaft (O3) rotates at a slower speed than the main output shaft (O1, O2) and/or
- the second secondary output shaft (O4) is arranged to be rotated by the motor (301) via a gearbox, so that the second secondary output shaft (O4) rotates slower than the main output shaft (O1, O2).

13. Household appliance for food preparation (110) according to any one of claims 10 to 12, in which the detection device (106) comprises a Hall-effect sensor (401) and a magnet (402), the magnet (402) being positioned on the flap (201), the Hall-effect sensor (401) being positioned in the head (104).

14. Household appliance for food preparation (110) according to any one of claims 10 to 12, in which the detection device (106) comprises a switch positioned in the head (104), the switch being actuated by the flap (201) when the flap (201) occupies the blocking position.
